# DEMANDE DE BREVET EUROPEEN

(11) **EP 2 112 018 A1**
(43) Date de publication de la demande: **28.10.2009**
(21) Numéro de dépôt: 09290279.0
(22) Date de dépôt: 16.04.2009
(51) Int. Cl.: B60P 1/04

(54) **Véhicule à benne basculante**

(30) Priorité: 21.04.2008 FR 0802212
(71) Demandeur: Carré, Denis, 86200 Loudun (FR)
(72) Inventeur: Carré, Denis, 86200 Loudun (FR)
(74) Mandataire: Bonnetat, Christian

(57) **Abrégé**

- Véhicule à benne basculante.
- Selon l'invention, le véhicule (I), pourvu d'une benne (6) et de moyens de basculement (8) de celle-ci, comporte des moyens d'appui (15,16) montés sur le châssis (4) du véhicule (I) et des moyens de déploiement (17) de ces moyens d'appui (15,16), les moyens de basculement (8) et les moyens de déploiement (17) formant une unité de basculement et de déploiement (8, 17) sans point d'attache sur ledit châssis (4).

## Description

La présente invention concerne un véhicule à benne basculante et notamment, mais non exclusivement, un véhicule adapté au nettoyage des voies de circulation.

On connaît déjà des véhicules de voirie comprenant une benne qui bascule autour d'un axe et un vérin dont une extrémité est articulée sur ladite benne pour permettre le basculement de cette dernière autour dudit axe, de façon réversible, entre une position de travail non basculée et une position de vidage basculée.

Toutefois, de tels véhicules sont généralement lourds du fait du poids élevé, d'une part, de leur benne et, d'autre part, de leur châssis qui doit être renforcé pour pouvoir supporter la benne chargée et les contraintes mécaniques exercées sur celui-ci lors du basculement de la benne. En outre, à cause de leur poids important, ces véhicules sont contraints de se déplacer lentement, qu'ils soient ou non dans une configuration de nettoyage.

La présente invention a pour objet de remédier à ces inconvénients et notamment de fournir un véhicule qui soit léger et rapide.

A cette fin, selon l'invention, le véhicule reposant sur une surface de support, telle que le sol, et pourvu :
- d'une benne basculant par rapport au châssis dudit véhicule, autour d'un axe de basculement, et
- de moyens de basculement, dont une extrémité est articulée sur ladite benne afin d'être apte à basculer cette dernière, autour dudit axe de basculement et de façon réversible, entre une position de travail non basculée et une position de vidage basculée, est remarquable :

- en ce qu'il comporte :
   ■ des moyens d'appui, du type béquille, montés sur ledit châssis de façon escamotable, et
   ■ des moyens de déploiement, dont une extrémité est articulée sur lesdits moyens d'appui afin d'être apte à déployer ces derniers, de façon réversible, entre une position escamotée éloignée de ladite surface de support et une position déployée telle que lesdits moyens d'appui sont alors en appui en un endroit de ladite surface de support au moins sensiblement à l'aplomb dudit axe de basculement de la benne, et
- en ce que lesdits moyens de basculement et lesdits moyens de déploiement forment une unité de basculement et de déploiement apte à former un étai de longueur variable entre ladite benne et lesdits moyens d'appui.

Ainsi, grâce à l'invention, l'unité de basculement et de déploiement n'a aucun point d'attache sur le châssis du véhicule. Aussi, lorsque les moyens d'appui occupent la position déployée, le basculement de la benne, actionné par l'unité de basculement et de déploiement, s'effectue sans contrainte mécanique sur le châssis puisque les efforts pour soulever la benne sont ramenés entre le sol et celle-ci.

En conséquence, le châssis du véhicule peut être léger. Le véhicule présente alors un gain notable de poids lui permettant d'être plus rapide, notamment lors de déplacements intermédiaires entre deux zones à nettoyer.

Selon l'invention, ladite unité de basculement et de déploiement comporte avantageusement au moins un vérin. Ainsi, elle peut par exemple comporter un seul vérin à double tige ou bien deux vérins solidaires l'un de l'autre respectivement à l'opposé de ladite benne et desdits moyens d'appui.

En outre, le véhicule de l'invention comprend avantageusement au moins un vérin auxiliaire dont une extrémité est articulée sur ledit châssis et l'autre extrémité est articulée sur lesdits moyens d'appui, ledit vérin auxiliaire étant apte à bloquer ces derniers lorsqu'ils sont en position déployée lors du basculement de ladite benne.

De plus, le véhicule de l'invention comprend avantageusement des moyens de blocage dudit vérin auxiliaire (par exemple du type contacteur) aptes à être activés lors du basculement de ladite benne de manière à bloquer la tige dudit vérin auxiliaire en position sortie.

Ainsi, le blocage de la tige du ou des vérins auxiliaires en position sortie entraîne le blocage des moyens d'appui en position déployée ce qui permet d'éviter tout escamotage inopportun de ces derniers lors de la montée et de la descente de la benne.

Selon une autre caractéristique de l'invention, ladite benne comporte de préférence un compartiment de stockage qui comprend une partie inférieure de forme tronconique surmontée d'une partie supérieure de forme cylindrique, ledit compartiment de stockage présentant une symétrie de révolution autour d'un axe orthogonal au plan dudit châssis lorsque ladite benne est en position de travail non basculée.

Ainsi, la forme tronconique de la partie basse du compartiment de stockage permet à la matière contenue ou arrivant dans la benne d'être déposée au fond de celle-ci, assurant à la benne un centre de gravité au plus bas, ce qui stabilise le véhicule lors des déplacements. De plus, la forme cylindrotronconique permet un vidage parfait et un nettoyage aisé du compartiment de stockage.

Avantageusement, ledit compartiment de stockage est surmonté d'un couvercle mobile permettant d'obturer, au moins partiellement, l'ouverture supérieure dudit compartiment de stockage lorsque ladite benne est en position de travail non basculée.

Ainsi, dans le cas où le véhicule est prévu pour effectuer un nettoyage par aspiration, le couvercle mobile peut clore le compartiment de stockage pour permettre de créer une dépression (par exemple 50 hPa) à l'intérieur de la benne et ainsi d'engendrer l'aspiration nécessaire au véhicule pour effectuer le nettoyage. La forme cylindrotronconique du compartiment de stockage confère à la benne une grande résistance mécanique apte à lui permettre de supporter, sans déformation, la dépression précitée et une masse élevée de matière, même dans le cas où sa construction est légère.

De façon avantageuse, lesdits moyens d'appui sont disposés à l'arrière du châssis dudit véhicule. Dans ce cas, lesdits moyens d'appui comportent de préférence un longeron transversal de longueur sensiblement égale à la largeur dudit châssis.

Ainsi, lorsque les moyens d'appui sont en position déployée, le longeron transversal est en appui au sol de manière à stabiliser ledit véhicule avant d'effectuer le basculement de la benne.

De plus, ledit axe de basculement est de préférence au moins approximativement parallèle audit longeron transversal. On minimise ainsi les contraintes mécaniques exercées sur le châssis du véhicule.

Par ailleurs, le véhicule de l'invention comprend des moyens de nettoyage par aspiration apte à aspirer des matières présentes sur ladite surface de support.

Les figures du dessin annexé feront bien comprendre comment l'invention peut être réalisée. Sur ces figures, des références identiques désignent des éléments semblables.

La figure 1 représente schématiquement, dans une vue en perspective, un exemple de réalisation de véhicule conforme à l'invention, lorsque les moyens d'appui sont escamotés et que la benne occupe une position non basculée.

La figure 2 illustre schématiquement et partiellement, en vue de côté, l'arrière du véhicule de l'invention représenté en figure 1.

La figure 3 est semblable à la figure 1, les moyens d'appui étant alors déployés en contact avec le sol et la benne occupant une position de vidage basculée.

La figure 4A représente un schéma du circuit de commande hydraulique du système à benne, conformément à l'exemple de réalisation de l'invention, lors du déploiement des moyens d'appui lorsque l'opération de basculement de la benne est demandée.

La figure 4B montre le circuit hydraulique de la figure 4A dans la position pour laquelle les moyens d'appui sont déployés et en contact avec le sol et la benne est suffisamment haute pour libérer le contacteur.

La figure 4C montre le circuit hydraulique de la figure 4A lors de l'opération de retour de la benne dans la position non basculée, les moyens d'appui étant bloqués en position déployée par les vérins auxiliaires.

La figure 4D montre le circuit hydraulique de la figure 4A, la benne ayant retrouvé une position suffisamment basse pour comprimer le contacteur.

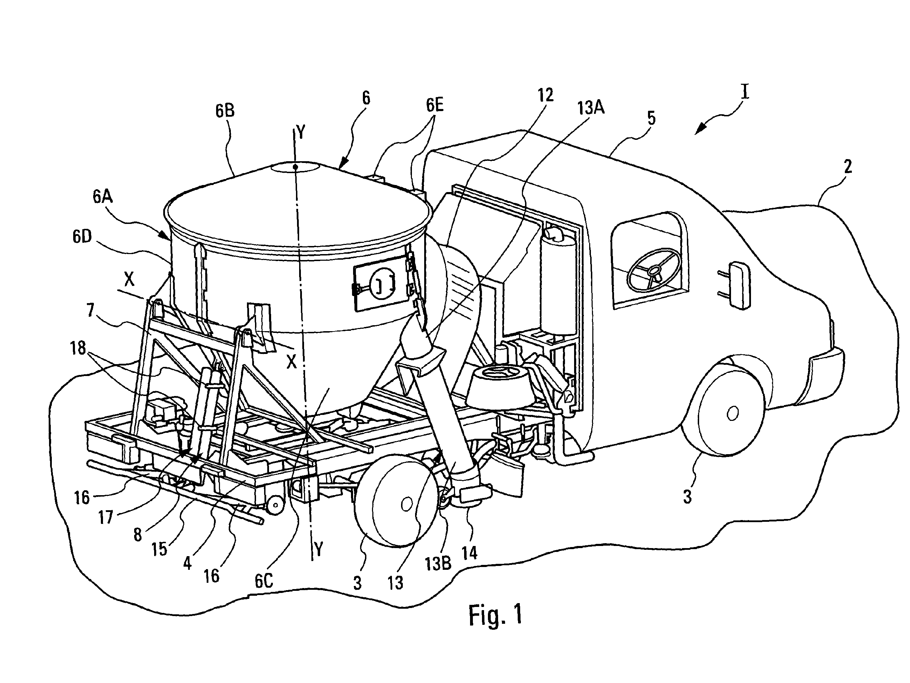

Dans l'exemple de réalisation conforme à la présente invention et représenté schématiquement sur la figure 1, le véhicule de voirie I est un véhicule à moteur (thermique ou électrique) qui repose sur le sol 2 par l'intermédiaire de roues 3. Il comporte un châssis 4, par exemple métallique, supportant l'habitacle 5 du véhicule I, sur sa partie avant, et des moyens de nettoyage, sur sa partie arrière.

Dans un mode de réalisation préféré de l'invention, les moyens de nettoyage permettent le ramassage de matière présente sur le sol 2 (par exemple des détritus, des déjections animales, etc ...) par un mécanisme d'aspiration (non décrit en détail dans la présente description). En variante, les moyens de nettoyage sont aptes à projeter un produit de lavage (par exemple de l'eau) sur les voies de circulation.

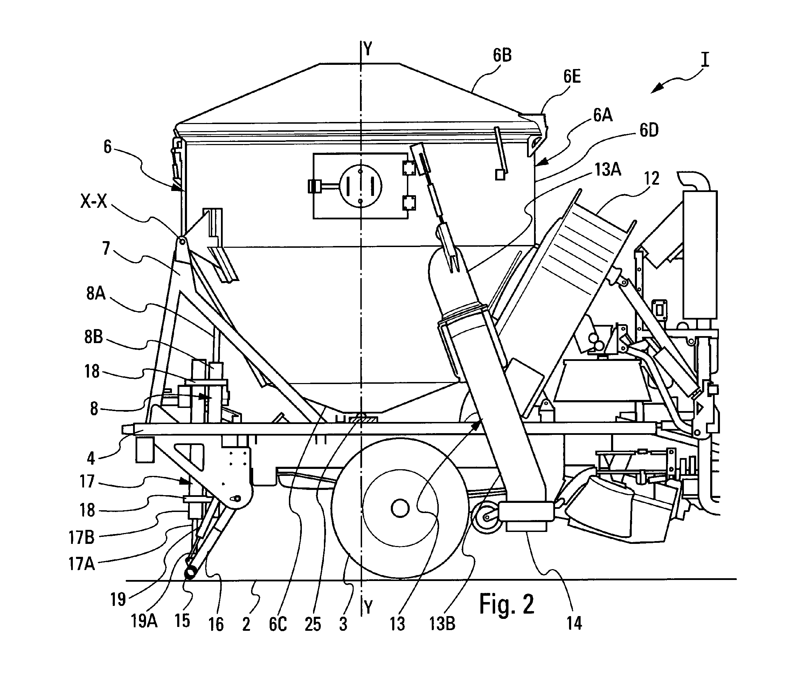

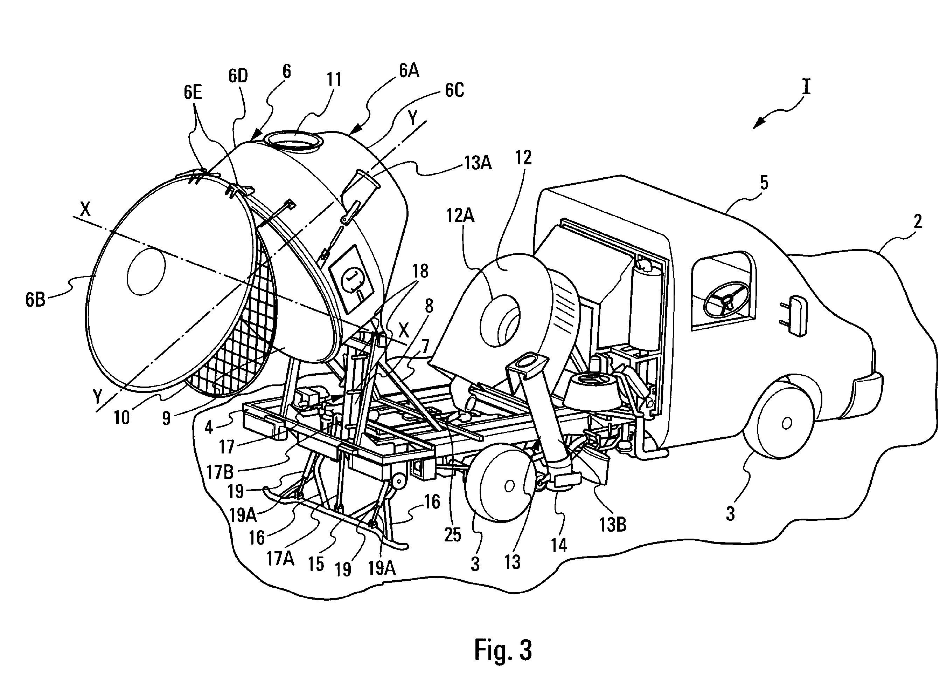

Comme le montre la figure 2, le véhicule I est équipé d'une benne 6 montée sur un support à palier 7, fixé sur le châssis 4 à l'arrière du véhicule I, qui permet à la benne 6 de basculer par rapport au châssis 4 autour d'un axe de basculement X-X. Il est également pourvu d'un vérin de basculement 8 dont l'extrémité de la tige 8A est articulée sur la benne 6 de manière à la faire basculer, autour de l'axe de basculement X-X et de façon réversible, entre une position de travail non basculée (représentée sur les figures 1 et 2) et une position de vidage basculée (illustrée sur la figure 3).

En outre, la benne 6 comporte un compartiment de stockage 6A qui comprend une partie inférieure 6C de forme tronconique surmontée d'une partie supérieure 6D de forme cylindrique. La partie inférieure 6C du compartiment de stockage comprend un fond fermé de forme tronconique surmonté d'un tronc de cône qui coopère avec la partie supérieure 6D de forme cylindrique. Le compartiment de stockage 6A présente une symétrie de révolution autour d'un axe Y-Y orthogonal au plan du châssis lorsque ladite benne est en position de travail (la benne est alors disposée verticalement sur le châssis). Il est en outre surmonté d'un couvercle mobile 6B de forme tronconique, articulé sur la partie supérieure 6D par des moyens de liaison 6E. Lorsque la benne 6 occupe la position de travail non basculée (figures 1 et 2), le couvercle 6B clôt le compartiment de stockage 6A et, lorsqu'elle occupe la position de vidage basculée (figure 3), l'ouverture supérieure 9 du compartiment de stockage 6A est dégagée autorisant alors le vidage de la benne 6.

Avantageusement, comme illustré sur la figure 3, une grille mobile 10 de forme circulaire est disposée entre le compartiment de stockage 6A et le couvercle 6B afin de recouvrir l'ouverture 9 du compartiment 6A, lorsque la benne 6 occupe la position de travail non basculée (figures 1 et 2) et limite ainsi la projection de la matière aspirée sur la surface interne du couvercle 6B. Dans la position de vidage basculée (figure 3), la grille 10 libère l'ouverture 9 de sorte que la matière amoncelée dans le compartiment de stockage 6A puisse être déversée.

Il est à noter que, lorsque les moyens de nettoyage sont aptes à projeter un produit de lavage sur les voies de circulation, la benne 6 est alors remplie d'un tel produit de lavage.

Tel qu'illustré sur la figure 3, le compartiment de stockage 6A présente un premier orifice d'aspiration 11 ménagé dans sa paroi latérale et qui coopère, avec ajustement et de façon amovible, avec l'orifice 12A d'un aspirateur 12 fixé sur le châssis 4, lorsque la benne 6 est en position de travail non basculée (figures 1 et 2). En outre, un second orifice d'aspiration (non visible sur les figures) est également ménagé dans la paroi latérale du compartiment de stockage 6A coopérant, quant à lui, avec la partie supérieure 13A d'une pipe d'aspiration 13 en deux parties. La partie supérieure 13A de cette pipe d'aspiration 13 est fixée sur la surface latérale du compartiment de stockage 6A et coopère, avec ajustement et de façon amovible, avec la partie inférieure 13B de la pipe 13, solidaire du châssis 4, lorsque la benne est en position de travail non basculée. Dans cette position (le couvercle mobile 6B obturant le compartiment de stockage 6A), l'aspiration créée par l'aspirateur 12 engendre une dépression (par exemple 50 hPa) à l'intérieur de la benne 6 qui provoque une aspiration de la matière au sol par l'extrémité inférieure 14 de la pipe d'aspiration 13.

Comme le montrent les figures 1 à 3, le véhicule I, conforme à l'invention, est en outre pourvu de moyens d'appui escamotables disposés avantageusement à l'arrière du châssis 4. Dans le mode de réalisation préféré, les moyens d'appui comportent un longeron transversal 15, parallèle à l'axe de basculement X-X, dont la longueur est de préférence au plus égale à la largeur du châssis 4. Ce longeron 15 est solidarisé à deux tiges 16 en forme de fourche qui sont articulées au châssis 4 par leur extrémité opposée au longeron 15.

De plus, dans l'exemple de réalisation de l'invention, le véhicule I comporte un vérin de déploiement 17, dont l'extrémité de la tige 17A est articulée sur le longeron transversal 1 5 afin de pouvoir le déployer, de façon réversible, entre une position escamotée éloignée du sol 2 (figure 1) et une position déployée (figures 2 et 3) telle que le longeron 1 5 est alors en appui en un endroit du sol 2 sensiblement à l'aplomb de l'axe de basculement X-X de la benne 6.

Selon l'invention, le vérin de basculement 8 et le vérin de déploiement 17 sont maintenus solidaires l'un de l'autre, par exemple par des moyens d'attache 18 solidarisant les corps 8B et 17B de chacun de ces deux vérins 8 et 17. Ils forment ainsi une unité de basculement et de déploiement permettant le déploiement des moyens d'appui et le basculement de la benne 6.

Tel que représenté sur les figures 2 et 3, le véhicule I est également équipé de deux vérins auxiliaires 1 9 (par exemple des vérins simple effet) aptes à bloquer le longeron 15 en position déployée lors du basculement (montée et descente) de la benne 6. Chacun des deux vérins a une première extrémité articulée sur le châssis 4 et une seconde extrémité articulée sur le longeron 15.

Avantageusement, selon l'invention, les tiges 1 9A des vérins auxiliaires 19, fixées sur le longeron 15, sont entraînées par ce dernier lors du déploiement ou de l'escamotage des moyens d'appui.

En outre, comme le montrent les figures 2 et 3, un contacteur 25 est monté sur un ressort 20 fixé sur le châssis 4.

Lorsque la benne occupe la position non basculée, la partie inférieure 6C de la benne 6 est en appui sur le contacteur 25 qui comprime alors le ressort 20. Le contacteur 25 est dans une position de repos.

Lorsque la benne 6 est suffisamment haute pour qu'aucune pression ne soit exercée sur le contacteur 25, le ressort 20 est détendu. Le contacteur 25 occupe alors une position de travail permettant le maintien en position sortie des tiges 19A des vérins auxiliaires 1 9 lors du basculement de la benne 6, lorsque les moyens d'appui occupent la position déployée.

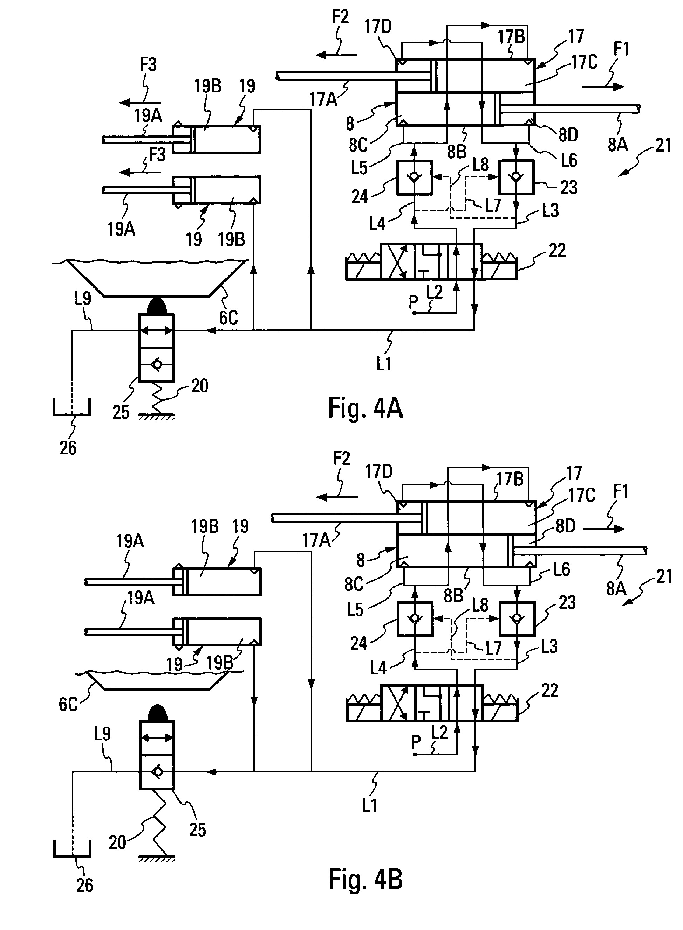

Dans l'exemple de réalisation de l'invention, comme le montrent les figures 4A à 4D, le circuit 21 de commande hydraulique du système à benne comprend :
- les vérins de basculement 8 et de déploiement 17 ;
- les vérins auxiliaires 1 9 ;
- un tiroir de distribution 22 de type 4/3 commandé électriquement par solénoïde ;
- deux clapets anti-retour 23 et 24 pilotés par les conduits L7 et L8 ;
- le contacteur 25 commandé par la benne 6 ;
- une bâche 26 alimentant en fluide hydraulique (par exemple de l'huile) le circuit 21.

La figure 4A illustre le circuit de commande hydraulique des vérins 8, 17 et 19 lors du déploiement des moyens d'appui lorsque l'opération de basculement de la benne 6 est demandée par un opérateur.

Lors de ce déploiement, le tiroir de distribution 22 occupe une position permettant l'alimentation en fluide (à partir d'un point de pression P) des chambres 8C et 1 7C des vérins de basculement 8 et de déploiement 17, par l'intermédiaire des conduits L2, L4 et L5, ainsi que le vidage des chambres 8D et 1 7D de ces vérins, par l'intermédiaire des conduits L6, L3 et L1.

Le contacteur 25 est quant à lui dans la position de repos permettant, par l'intermédiaire du conduit L9, l'écoulement dans la bâche 26 d'au moins une partie du fluide refoulé des chambres 8D et 17D. Une autre partie du fluide refoulé peut par exemple alimenter, par l'intermédiaire du conduit L1, les chambres 19B des vérins 19.

Sur la figure 4A, le déplacement des tiges 8A, 17A et 19A des vérins respectifs 8, 17 et 19 est symbolisé respectivement par les flèches F1, F2 et F3.

Comme le montre la figure 4B, lorsque les moyens d'appui sont entièrement déployés et en contact avec le sol (les tiges 1 9A sont alors sorties) et que la benne 6 est suffisamment haute (la résistance du sol étant alors suffisante pour supporter la poussée égale à la charge contenue dans la benne 6 plus l'effort nécessaire au basculement de celle-ci), la position du contacteur 25 est modifiée sous l'action du ressort 20. Il passe alors de la position de repos à la position de travail de manière à bloquer le retour du fluide du circuit 21 vers la bâche 26, par l'intermédiaire d'un clapet anti-retour. Les tiges 19A sont alors maintenues sorties, quelle que soit la poussée exercée sur ces dernières par le longeron 15, permettant ainsi le blocage des moyens d'appui en position déployée.

En outre, le tiroir de distribution 22 maintient l'alimentation des chambres 8C et 17C des vérins 8 et 17 de manière à permettre la poursuite de la course de sortie des tiges 8A et 17A et, par voie de conséquence, la montée de la benne 6 jusqu'à son point de basculement.

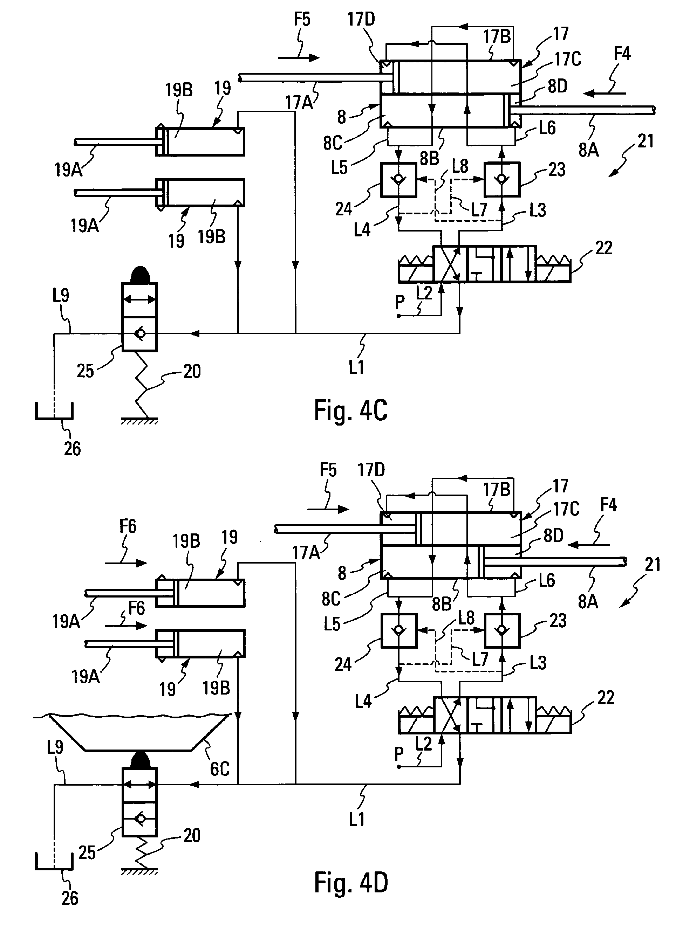

Comme l'illustre la figure 4C, lorsque l'opération de retour de la benne 6 dans la position non basculée est demandée par l'opérateur (les moyens d'appui étant bloqués en position déployée par les vérins auxiliaires 19), la position du tiroir de distribution 22 est modifiée afin de permettre l'alimentation en fluide des chambres 8D et 17D, ainsi que le vidage des chambres 8C et 1 7C, ce qui entraîne la rentrée des tiges 8A et 17A (leur déplacement étant symbolisé respectivement par les flèches F4 et F5).

Lors de la descente de la benne 6, le retour du fluide vers la bâche 26 est maintenu bloqué par le contacteur 25. Les tiges 1 9A sont alors maintenues en position sortie et les moyens d'appui restent bloqués en position déployée.

Tel qu'illustré sur la figure 4D, lorsque la benne a retrouvé une position suffisamment basse pour comprimer le ressort 20 par l'intermédiaire du contacteur 25, ce dernier reprend sa position initiale (figure 4A) permettant de nouveau l'écoulement du fluide dans la bâche 26.

Les tiges 19A des vérins auxiliaires 19 n'étant plus maintenues bloquées, les moyens d'appui peuvent être escamotés par le vérin de déploiement 1 7 ce qui entraîne la rentrée des tiges 19A (symbolisée par les flèches F6) des vérins auxiliaires 19.

Le tiroir de distribution 22 maintient en outre l'alimentation en fluide des chambres 8D et 17D des vérins 8 et 17 ainsi que le vidage des chambres 8C et 17C de manière à poursuivre la course de rentrée des tiges 8A et 17A permettant notamment l'escamotage des moyens d'appui.

## Revendications

1. Véhicule (I) reposant sur une surface de support (2), telle que le sol, et pourvu :
- d'une benne (6) basculant par rapport au châssis (4) dudit véhicule (I), autour d'un axe de basculement (X-X), et
- de moyens de basculement (8), dont une extrémité est articulée sur ladite benne (6) afin d'être apte à basculer cette dernière, autour dudit axe de basculement (X-X) et de façon réversible, entre une position de travail non basculée et position de vidage basculée,
**caractérisé :**
- **en ce qu**'il comporte :
■ des moyens d'appui (15,16), du type béquille, montés sur ledit châssis (4) de façon escamotable, et
■ des moyens de déploiement (17), dont une extrémité est articulée sur lesdits moyens d'appui (15,16) afin d'être apte à déployer ces derniers, de façon réversible, entre une position escamotée éloignée de ladite surface de support (2) et une position déployée telle que lesdits moyens d'appui (15,16) sont alors en appui en un endroit de ladite surface de support (2) au moins sensiblement à l'aplomb dudit axe de basculement (X-X) de la benne (6) ; et
- en ce que lesdits moyens de basculement (8) et lesdits moyens de déploiement (17) forment une unité de basculement et de déploiement (8,17) apte à former un étai de longueur variable entre ladite benne (6) et lesdits moyens d'appui (15,16).

2. Véhicule selon la revendication 1,
**caractérisé en ce que** ladite unité de basculement et de déploiement (8, 17) comporte au moins un vérin (8,17).

3. Véhicule selon l'une des revendications 1 ou 2,
**caractérisé en ce qu'**il comprend en outre au moins un vérin auxiliaire (19) dont une extrémité est articulée sur ledit châssis (4) et une autre extrémité est articulée sur lesdits moyens d'appui (15,16), ledit vérin auxiliaire (19) étant apte à bloquer ces derniers lorsqu'ils sont en position déployée lors du basculement de ladite benne (6).

4. Véhicule selon la revendication 3,
**caractérisé en ce qu'**il comprend des moyens de blocage (25) dudit vérin auxiliaire (19) aptes à être activés lors du basculement de ladite benne (6) de manière à bloquer la tige (19A) dudit vérin auxiliaire (19) en position sortie.

5. Véhicule selon l'une quelconque des revendications 1 à 4,
**caractérisé en ce que** ladite benne (6) comporte un compartiment de stockage (6A) qui comprend une partie inférieure (6C) de forme tronconique surmontée d'une partie supérieure (6D) de forme cylindrique, ledit compartiment de stockage (6A) présentant une symétrie de révolution autour d'un axe (Y-Y) orthogonal au plan dudit châssis (4) lorsque ladite benne (6) est en position de travail non basculée.

6. Véhicule selon la revendication 5,
**caractérisé en ce que** ledit compartiment de stockage (6A) est surmonté d'un couvercle mobile (6B) permettant d'obturer, au moins partiellement, l'ouverture supérieure (9) dudit compartiment de stockage (6A) lorsque ladite benne (6) est en position de travail non basculée.

7. Véhicule selon l'une quelconque des revendications 1 à 6,
**caractérisé en ce que** lesdits moyens d'appui (15,16) sont disposés à l'arrière du châssis (4) dudit véhicule (I).

8. Véhicule selon la revendication 7,
**caractérisé en ce que** lesdits moyens d'appui (15,16) comportent un longeron transversal (15) de longueur sensiblement égale à la largeur dudit châssis (4).

9. Véhicule selon l'une des revendications 7 ou 8,
**caractérisé en ce que** ledit axe de basculement (X-X) est au moins approximativement parallèle audit longeron transversal (15).

10. Véhicule selon l'une quelconque des revendications 1 à 9,
**caractérisé en ce qu'**il comprend des moyens de nettoyage par aspiration apte à aspirer des matières présentes sur ladite surface de support (2).
